# EUROPÄISCHE PATENTANMELDUNG

(11) **EP 2 386 452 A2**
(43) Veröffentlichungstag der Anmeldung: **16.11.2011**
(21) Anmeldenummer: 11165052.9
(22) Anmeldetag: 06.05.2011
(51) Int. Cl.: B60T 8/24, B60T 8/32, B60T 13/66, B60T 13/68, B60T 17/18

(54) **Druckmittelbetätigte Bremseinrichtung mit Niederdruck- und Hochdruckbereich**

(30) Priorität: 11.05.2010 DE 102010020267
(71) Anmelder: KNORR-BREMSE Systeme für Nutzfahrzeuge GmbH, 80809 München (DE)
(72) Erfinder: Mayr, Mathias, 82110, Germering (DE)
(74) Vertreter: Schönmann, Kurt

(57) **Zusammenfassung**

Eine druckmittelbetätigte Bremseinrichtung mit Niederdruck- und Hochdruckbereich basiert auf dem Gedanken, dass mehr als 95% aller Bremsungen von Nutzfahrzeugen mit einem relativ geringen Bremsdruck bis zu einem Bruchteil des maximal möglichen Bremsdrucks durchgeführt werden. In diesem häufig auftretenden Niedrigdruckbereich wird eine sensible Drucksteuerung benötigt, um beispielsweise eine Bremsschlupfregelung für die Betriebsbremse, eine Angleichung des Bremsbelagverschleißes bei verschiedenen Radbremsen oder im Rahmen eines Bremsen-blendings etwa eine Aktivierung eines Retarders vornehmen zu können. Bei den in der Praxis selteneren Bremsungen unter hohem Bremsdruck (Hochdruckbereich), wie etwa bei Not- oder Schnellbremsungen ist es dagegen entscheidend, wenn der maximale Bremsdruck möglichst schnell aufgebaut wird. Die Bremseinrichtung ist so aufgebaut, dass abhängig von der jeweiligen Bremsdruckanforderung (Niederdruckbereich oder Hochdruckbereich) jeweils unterschiedliche Strömungswege des Druckmittels mittels Ventileinrichtungen eingestellt werden.

## Beschreibung

### Stand der Technik

Die Erfindung geht aus von einer druckmittelbetätigten Bremseinrichtung eines Fahrzeugs gemäß Anspruch 1.

Eine solche Bremseinrichtung ist beispielsweise aus der DE 40 30 980 A1 bekannt. Die Bremseinrichtung ist elektropneumatisch betätigt und umfasst einen vorrangigen elektrischen und einen pneumatischen Steuerkreis als unterlegte Sicherheitsebene. Über die Steuerkreise ist jeweils ein jedem Radbremszylinder vorgeordnetes Relaisventil ansteuerbar, über das beim Bremsen Druckluft aus einem Vorratsbehälter in die Bremszylinder gelangt, wobei jedem Relaisventil zwei dem elektrischen Steuerkreis zugeordnete Magnetventile (Einlassventil bzw. Auslassventil) und ein Backup-Magnetventil zugeordnet sind. Weiterhin ist ein Drucksensor zum Erfassen des Ist-Bremsdrucks vorgesehen. Das Relaisventil und die drei Magnetventile sind in jeweils einer radweise vorhandenen Drucksteuerventileinrichtung zusammengefasst, welche von einem elektronischen Steuergerät ansteuerbar ist. Eine solche Drucksteuerventileinrichtung wird über eine pneumatische Vorratsleitung mit Vorratsdruckluft und durch eine pneumatische Steuerleitung mit Steuerdruckluft eines Fußbremsmoduls versorgt. Die bekannte Bremseinrichtung ist ABS-fähig, d.h. dass das elektronische Steuergerät über entsprechende Steuerroutinen verfügt.

Der vorliegenden Erfindung liegt demgegenüber die Aufgabe zugrunde, eine Bremseinrichtung der eingangs erwähnten Art derart weiter zu entwickeln, dass sie einfacher und kompakter aufgebaut ist.

Diese Aufgabe wird erfindungsgemäß durch die Merkmale von Anspruch 1 gelöst.

### Offenbarung der Erfindung

Die Erfindung basiert auf dem Gedanken, dass mehr als 95% aller Bremsungen von Nutzfahrzeugen mit einem relativ geringen Bremsdruck bis zu einem Bruchteil (ca. 2 bar (2˙10⁵ Pa)) des maximal möglichen Bremsdrucks durchgeführt werden. In diesem häufig auftretenden Niedrigdruckbereich wird eine sensible Drucksteuerung benötigt, um beispielsweise eine Bremsschlupfregelung für die Betriebsbremse, eine Angleichung des Bremsbelagverschleißes bei verschiedenen Radbremsen oder im Rahmen eines Bremsen-blendings etwa eine Aktivierung eines Retarders vornehmen zu können.

Bei den in der Praxis selteneren Bremsungen unter hohem Bremsdruck (Hochdruckbereich), also bei Bremsungen von mehr als 2 bar (2˙10⁵ Pa) wie etwa bei Not- oder Schnellbremsungen ist es dagegen entscheidend, wenn der maximale Bremsdruck möglichst schnell aufgebaut wird.

Diesen Anforderungen gemäß ist die Bremseinrichtung gemäß der Erfindung so aufgebaut, dass sie abhängig von der jeweiligen Bremsdruckanforderung (Niederdruckbereich oder Hochdruckbereich) jeweils unterschiedliche Strömungswege des Druckmittels mittels Ventileinrichtungen eingestellt werden.

Im Einzelnen beinhaltet die Bremseinrichtung gemäß der Erfindung folgendes:
a) wenigstens einen Druckmittelvorrat, welcher wenigstens einen Kanal eines Fußbremsventils eingangseitig mit Druckmittel versorgt,
a) ein Druckbegrenzungsventil, welches eingangsseitig mit dem Druckmittelvorrat verbunden ist und welches den in dem Druckmittelvorrat herrschenden Vorratsdruck auf einen vorgegebenen reduzierten Druck begrenzt und an seinen Ausgang steuert,
b) ein erstes Wechselventil, welches eingangsseitig einerseits mit dem Ausgang des Druckbegrenzungsventils in Verbindung steht und andererseits von einem Kanal des Fußbremsventils steuerbar ist und welches von den eingangsseitig anstehenden Drücken den größeren Druck ausgangsseitig weiter steuert,
c) wenigstens ein erstes Magnetventil welches abhängig von einer elektrischen Ansteuerung durch ein elektronisches Steuergerät den an dem ersten Wechselventil ausgangsseitig weiter gesteuerten Druck im Rahmen einer Durchlassstellung an ein zweites Wechselventil durchsteuert oder diese Durchsteuerung im Rahmen einer Sperrstellung sperrt,
d) ein Rückhalteventil, welches den an dem ersten Wechselventil ausgangsseitig weiter gesteuerten Druck im Rahmen einer Sperrstellung zurückhält, wenn dieser Druck kleiner als der vorgegebene reduzierte Druck ist und welches den an dem ersten Wechselventil ausgangsseitig weiter gesteuerten Druck im Rahmen einer Durchlassstellung an das zweite Wechselventil eingangsseitig durchsteuert, falls dieser Druck größer als der vorgegebene reduzierte Druck ist, wobei das zweite Wechselventil von den eingangsseitig anstehenden Drücken den größeren Druck ausgangsseitig weiter steuert,
e) wenigstens ein mit dem zweiten Wechselventil ausgangsseitig verbundenes ABS-Drucksteuerventil, welches abhängig von einem an wenigstens einem gebremsten Rad vorliegenden Bremsschlupf den vom zweiten Wechselventil weiter gesteuerten Druck als Bremsdruck in wenigstens einem Bremszylinder steuert, um den Bremsschlupf auf einen optimalen Bremsschlupf einzuregeln,
f) eine Bremsanforderung repräsentierende Signale erzeugende Mittel, wobei
g) das elektronische Steuergerät das erste Magnetventil abhängig von den eine Bremsanforderung repräsentierenden Signalen steuert.

Falls der einerseits eingangsseitig an dem ersten Wechselventil anstehende Druck des Kanals des Fußbremsventils oder ein vom diesem Druck abgeleiteter Druck kleiner als oder gleich wie der andererseits eingangsseitig an dem ersten Wechselventil anstehende, vom Druckminderventil ausgesteuerte reduzierte Druck ist, was den oben erwähnten Niederdruckbereich (p < 2˙10⁵ Pa) darstellt, so wird das erste Magnetventil von dem Steuergerät in seine Durchlassstellung geschaltet, um über das ABS-Drucksteuerventil im Rahmen des elektrischen Bremskreises eine bremsschlupfgeregelte Bremsung einzuleiten. Das Rückhalteventil verbleibt dagegen in Sperrstellung, weil der dieses in Durchlassstellung schaltende Druck nicht erreicht ist.

Falls der einerseits eingangsseitig an dem ersten Wechselventil anstehende Druck des Kanals des Fußbremsventils oder ein vom diesem Druck abgeleiteter Druck größer als der andererseits eingangsseitig an dem ersten Wechselventil anstehende, vom Druckbegrenzungsventil ausgesteuerte reduzierte Druck ist, was den oben erwähnten Hochdruckbereich (p > 2˙10⁵ Pa) darstellt, wird das Magnetventil von dem Steuergerät ebenfalls in Durchlassstellung geschaltet, um über das ABS-Drucksteuerventil einen bremsschlupfgeregelten Bremsdruck im Rahmen des elektrischen Bremskreises zu erzeugen. Zugleich schaltet aber das rein mechanisch pneumatisch gesteuerte Rückhalteventil bedingt durch das höhere Druckniveau selbstständig in Durchlassstellung, um einen Backup-Druck für den pneumatischen Bremskreis zu erzeugen.

Insgesamt ist zwischen einem bevorzugt radnah oder achsmittig angeordneten Ventilblock beinhaltend wenigstens das erste Magnetventil, das Rückhalteventil und das zweite Wechselventil und optional auch das ABS-Drucksteuerventil und der Steuereinheit beinhaltend wenigstens das erste Wechselventil und das Druckbegrenzungsventil nur noch eine einzige pneumatische Leitung nötig, um einen vorrangigen elektrischen Steuerkreis sowie einen nachrangigen pneumatischen Steuerkreis zu realisieren. Beim eingangs genannten Stand der Technik werden hierfür zwei pneumatische Leitungen benötigt.

Der vorrangige elektrische Betriebsbremse und der nachrangige pneumatische Bremskreis sind dann bezogen auf die jeweiligen Komponenten nicht mehr zwei relativ unabhängige Bremskreise sondern verschmelzen zu einem sich gegenseitig ergänzendem Gesamtsystem. Dadurch verringert sich der Bauaufwand.

Weiterhin werden durch den verminderten Druck im Niederdruckbereich die Druckaufbaugradienten flacher, was eine präzisere Regelung zulässt.

Vom Druckmittelvorrat zum Fußbremsventil führen nur noch pneumatische Steuerleitungen und keine leistungsführenden Druckluftleitungen. Wegen der dann geringeren Leitungsquerschnitte ist dies vor allem im Hinblick auf den begrenzten Bauraum Im Bereich des Fußbremsventils von Vorteil.

Für die Auslegung des Niederdruckbereichs sind 10% bis 20% des maximal möglichen Bremsdruckes ausreichend. Damit sind die Versorgungsleitungen nicht wie beim Stand der Technik permanent mit dem maximal möglichen Bremsdruck sondern können mit einem demgegenüber geringeren Druck belastet werden. Leckagen wirken sich dann in geringerem Umfang negativ aus.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt steuert das elektronische Steuergerät das ABS-Drucksteuerventil abhängig von den eine Bremsanforderung repräsentierenden Signalen sowie abhängig von auf Raddrehzahlen basierenden Bremsschlupfwerten.

Generell umfassen die eine Bremsanforderung repräsentierenden Signale fahrerbremswunschabhängige Signale und/oder fahrerbremswunschunabhängige Signale. Fahrerbremswunschabhängige Signale werden vom Fußbremsventil bzw. Fußbremsmodul in Abhängigkeit von der Fahrerbremsanforderung erzeugt. Dabei können fahrerbremswunschabhängige Signale erzeugende Mittel vorzugsweise einen Drucksensor zur Erzeugung eines vom Druck in dem Kanal des Fußbremsventils abhängigen elektrischen Drucksignals beinhalten. Denkbar ist aber auch ein rein elektrischer Sensor wie ein Potentiometer, um ein die Drehlage des Fußbremspedals repräsentierendes Signal zu erzeugen.

Systeme, die die Bremseinrichtung fahrerwunschunabhängig und automatisch steuern, sind beispielsweise eine Fahrdynamikregelung (ESP) und/oder eine Antriebsschlupfregelung (ASR). Fahrerbremswunschunabhängige Signale erzeugende Mittel wie Lenkwinkelsensor, Gierratensensor und Raddrehzahlsensoren sind deshalb bevorzugt von einer Fahrdynamikregelung (ESP) und/oder von einer Antriebsschlupfregelung (ASR) umfasst. Eine Fahrdynamikregelung steuert die Bremseinrichtung beispielsweise bei instabilem Fahrzeugverhalten während einer Kurvenfahrt ohne eine vom Fahrer eingeleitete Bremsung, um durch Brems- und Antriebseingriffe das Fahrzeug zu stabilisieren.

Um durch kleine Steuervolumina größere Arbeitsvolumina steuern zu können, ist bevorzugt wenigstens ein Relaisventil vorgesehen, welches an seinem Steuereingang vom Kanal des Fußbremsventils steuerbar ist, eingangsseitig mit dem Druckmittelvorrat und ausgangsseitig mit einem Eingang des ersten Wechselventils in Verbindung steht.

Für den Fall, dass die Bremseinrichtung durch fahrerbremswunschunabhängige Signale gesteuert wird, ist ein drittes Wechselventil vorgesehen, welches eingangseitig einerseits mit einem vom Steuergerät elektrisch steuerbaren zweiten Magnetventil und andererseits mit dem Kanal des Fußbremsventils verbunden ist, um von den eingangsseitig anstehenden Drücken den größeren Druck an den Steuereingang des Relaisventils weiter zu steuern, wobei das Magnetventil eingangsseitig mit dem Druckmittelvorrat verbunden ist. Dieses zweite Magnetventil ist dann vom Steuergerät fahrerbremswunschunabhängig vom Steuergerät beispielsweise im Rahmen einer Fahrdynamikregelung automatisch schaltbar.

Die Steuerung durch fahrerbremswunschunabhängige Signale kann selbstverständlich auch ohne Vorsehen eines Relaisventils erfolgen, so dass dann der Ausgang des dritten Wechselventils direkt mit einem Eingang des ersten Wechselventils verbunden ist.

Bevorzugt sind das Relaisventil, das Druckbegrenzungsventil und das erste Wechselventil in einem Steuerblock zusammengefasst, welcher beispielsweise räumlich nahe in Bezug zu dem Fußbremsventil bzw. Fußbremsmodul angeordnet ist. In diesen Steuerblock können im Falle eines Ausbaus der Bremseinrichtung mit Funktionen einer Fahrdynamik- oder Fahrstabilitätsregelung auch das zweite Magnetventil und das dritte Wechselventil integriert sein.

Besonders bevorzugt sind wenigstens das Rückhalteventil, das erste Magnetventil und das zweite Wechselventil sowie optional auch das wenigstens eine ABS-Drucksteuerventil in einem Ventilblockintegriert, welcher radnah in Bezug zu dem Rad oder achsmittig an einer Achse der Räder angeordnet ist, dessen oder deren Bremszylinder der Ventilblock mit Bremsdruck versorgt.

Zwischen dem fußbremsventilnahen Steuerblock und dem radnahen Ventilblock verläuft dann lediglich eine einzige pneumatische Leitung, in welcher entweder der vorgegebene reduzierte Druck des Druckbegrenzungsventils (Niederdruckbereich) oder der Ausgangsdruck des Relaisventils (Hochdruckbereich) geführt ist.

Die Bremseinrichtung gemäß der Erfindung ist in verschiedenen Ausbaustufen denkbar. Die einfachste Ausführung beinhaltet lediglich eine ABS-Funktionalität. In einer weiteren Ausbaustufe können Systeme, welche fahrerwunschunabhängig die Bremseinrichtung steuern, wie beispielsweise eine Fahrdynamik- oder Fahrstabilitätsregelung ergänzt werden, wozu in der Bremseinrichtung dann lediglich das zweite Magnetventil und das dritte Wechselventil hinzugefügt werden müssen.

Nicht zuletzt kann in einer weiteren Ausbaustufe auch ein vollständiges elektronisches Bremssystem erreicht werden, indem die Bremseinrichtung durch eine Drucksensorik ergänzt wird, welche den Bremsdruck im Bremszylinder als Ist-Bremsdruck misst und mittels im Steuergerät implementierten Steuerroutinen auf einen Soll-Bremsdruck einregelt.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt die einzige Figur einen schematischen Aufbau einer Vorrichtung zur Steuerung einer Bremsanlage gemäß einer bevorzugten Ausführungsform der Erfindung.

### Beschreibung der Ausführungsbeispiele

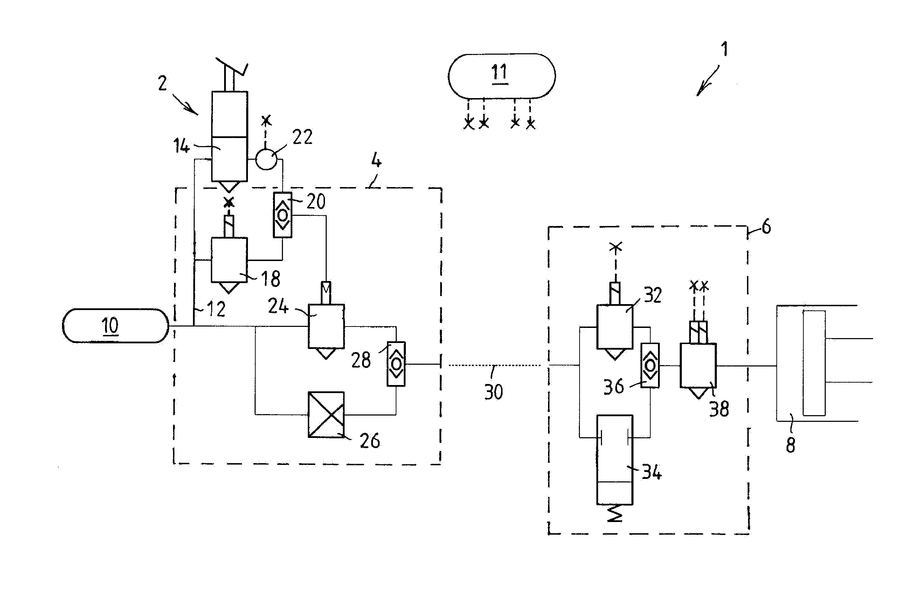

Die in Fig.1 gezeigte elektro-pneumatische Bremseinrichtung 1 mit vorrangigem elektrischem Bremskreis und nachrangigem pneumatischen Bremskreis ist für ein Nutzfahrzeug vorgesehen und beinhaltet einen Steuerblock 4 sowie einen in unmittelbarer Nachbarschaft zu wenigstens einer Radbremse angeordneten Ventilblock 6, der vom Steuerblock 4 gesteuert wird. Der Steuerblock 4 ist bevorzugt in eine sowieso vorhandene Bremskomponente integriert, wie etwa ein Fußbremsventil 2 oder die Luftaufbereitungsanlage (EAC).

Gemäß der hier beschriebenen Ausführungsform ist die Bremseinrichtung 1 mit einer Fahrdynamikregelung (ESP) kombiniert, welche abhängig vom Stabilitätszustand des Nutzfahrzeugs die Bremsen und eine Antriebsmaschine des Fahrzeugs in bekannter Weise steuert. Weiterhin ist auch eine Antriebsschlupfregelung (ASR) vorgesehen. Nicht zuletzt weist die Bremseinrichtung 1 eine ABS-Funktionalität auf, um den Bremsdruck für wenigstens einen Bremszylinder 8 im Sinne einer Bremsschlupfregelung regeln zu können. Entsprechende Steuerroutinen sind in einem elektronischen Steuergerät 11 gespeichert, welches Signale von hier nicht dargestellten Sensoren wie Raddrehzahlsensoren, Gierratensensor, Bremsdrucksensor und Lenkwinkelsensor empfängt und weiter verarbeitet.

Zur Druckluftversorgung des Steuerblocks 4 und des Ventilblocks 6 ist ein Druckluftvorrat 10 vorgesehen, von welchem sich eine Druckleitung 12 zu einem pneumatischen Kanal 14 des Fußbremsventils 2 und zu einem Eingang eines Magnetventils 18 erstreckt.

Das Fußbremsventil 2 erzeugt in dem pneumatischen Kanal 14 abhängig von einem Fahrerbremswunsch, d.h. abhängig von einer Fußbremspedalbetätigung einen pneumatischen Steuerdruck, welcher proportional zur Pedalbetätigung ist. Das Magnetventil 18 ist als ein von dem elektronischen Steuergerät 11 steuerbares 2/2-Wege-Magnetventil mit zwei Schaltstellungen ausgebildet und schaltet den an seinem Eingang anstehenden Vorratsdruck an seinen Ausgang gemäß einer Durchlassstellung weiter. In der Sperrstellung des Magnetventils 18 wird diese Verbindung hingegen gesperrt.

Der Ausgänge des Magnetventils 18 und des Kanals 14 des Fußbremsventils sind über Druckleitungen mit je einem Eingang eines Wechselventils ("select high") 20 verbunden, welches den größeren Druck an seinen Ausgang weiter leitet. Im Sinne der Druckführung ausgehend vom Druckluftvorrat 10 bis zum Wechselventil 20 sind deshalb der Kanal 14 des Fußbremsventils 2 und das Magnetventil 18 parallel geschaltet.

In der vom Fußbremsventil 2 zum Wechselventil 20 geführten Druckleitung ist ein Drucksensor 22 angeordnet, welcher ein von dem durch den Kanal 14 des Fußbremsventils 2 erzeugten Druck abhängiges Signal erzeugt. Dieser Druck repräsentiert den Fahrerbremswunsch bei Betätigung des Fußbremsventils 2. Der Ausgang des Wechselventils 20 ist mit einem Steuereingang eines Relaisventils 24 verbunden, dessen Vorratseingang ebenfalls mit dem Druckluftvorrat 10 in Verbindung steht. Andererseits wird auch ein Eingang eines Druckbegrenzungsventils 26 vom Druckluftvorrat 10 versorgt. Das Druckbegrenzungsventil 26 begrenzt den vom Druckluftvorrat 10 gelieferten Vorratsdruck auf einen voreingestellten oder vorgegebenen reduzierten Druck, beispielsweise auf 2 bar (2˙10⁵ Pa). Die Ausgänge des Relaisventils 24 und des Druckbegrenzungsventils 26 münden in Eingänge eines weiteren Wechselventils 28, das wiederum den größeren der an seinen Eingängen anstehenden Drücke an seinen Ausgang weiter schaltet ("select high"). Im Sinne der Druckführung vom Druckluftvorrat 10 zu dem weiteren Wechselventil 28 sind daher das Relaisventil 24 und das Druckbegrenzungsventil 26 parallel geschaltet.

Der Steuerblock 4 der Bremseinrichtung umfasst dann das Magnetventil 18, das Wechselventil 20, das Relaisventil 24, das Druckbegrenzungsventil 26 sowie das weitere Wechselventil 28. Diese Ventile sind dann beispielsweise in dem Steuerblock 4 integriert ausgebildet. Zum Anschluss des Fußbremsventils 2 und des Druckluftvorrats 10 sind in dem Steuerblock 4 entsprechende Anschlüsse vorgesehen.

Über eine einzige Druckleitung 30 steht der in unmittelbarer Nähe zum in einem Führerhaus des Nutzfahrzeugs untergebrachten Fußbremsventil 2 angeordnete Steuerblock 4 mit dem radnahen oder achsmittig angeordneten Ventilblock 6 in Verbindung. Diese Druckleitung 30 ist dann beispielsweise entlang eines Längsträgers eines Rahmens des Nutzfahrzeugs verlegt.

Der Ventilblock 6 umfasst ein weiteres Magnetventil 32, ein Rückhalteventil 34, ein weiteres Wechselventil 36 sowie optional auch wenigstens ein ABS-Drucksteuerventil 38. Genauer ist die einzige vom Anschluss des Steuerblocks 4 heran geführte Druckleitung 30 mit einem Anschluss des Ventilsblocks 6 verbunden und dieser mit Eingängen des weiteren Magnetventils 32 und des Rückhalteventils 34.

Gemäß einer weiteren Ausführungsform könnten nur das erste Magnetventil 32, das zweite Wechselventil 36 und das Rückhalteventil 34 in einem achsmittig angeordneten Ventilblock 6 untergebracht sein, wobei dann das wenigstens eine ABS-Drucksteuerventil 38 dem Ventilblock 6 nachgeschaltet ist. Je nach Anzahl von separat bremsschlupfgeregelten Rädern ist eine entsprechende Anzahl von ABS-Drucksteuerventilen 38 vorhanden. Bei einer Bremseinrichtung 1 eines dreiachsigen Nutzfahrzeug beispielsweise könnte ein solcher Ventilblock 6 vier nachgeschaltete ABS-Drucksteuerventile 38 für zwei Hinterachsen steuern.

Das weitere Magnetventil 32 ist wie das eine Magnetventil 18 als ein vom elektronischen Steuergerät 11 steuerbares 2/2-Wege-Magnetventil mit zwei Schaltstellungen ausgebildet und schaltet den an seinem Eingang anstehenden Druck an seinen Ausgang gemäß einer Durchlassstellung weiter. In der Sperrstellung des weiteren Magnetventils 32 wird diese Verbindung hingegen gesperrt.

Das Rückhalteventil 34 hält den in die einzige Druckleitung 30 eingesteuerten Druck im Rahmen einer Sperrstellung zurück, wenn dieser Druck kleiner als der vorgegebene reduzierte Druck (2 bar) ist und steuert diesen Druck im Rahmen einer Durchlassstellung an seinen Ausgang durch, falls dieser Druck größer als der vorgegebene reduzierte Druck (2 bar) ist. Das Rückhalteventil 34 ist dabei selbststeuernd ausgebildet, d.h. dass seine jeweilige Schaltstellung alleine von dem an seinem Eingang herrschenden Druck bestimmt wird.

An ihren Ausgängen stehen das Rückhalteventil 34 und das weitere Magnetventil 32 mit Eingängen des weiteren Wechselventils 36 in Verbindung, welches den jeweils größeren Druck ("select high") an seinen Ausgang weiter schaltet, der mit einem Eingang des vom Steuergerät 11 elektrisch gesteuerten ABS-Drucksteuerventils 38 in Verbindung steht. Im Sinne der Druckführung von der einzigen zwischen dem Steuerblock 4 und dem Ventilblock 6 verlaufenden Druckleitung 30 bzw. von deren Anschluss am Ventilblock 6 bis zu dem weiteren Wechselventil 36 sind daher das Rückhalteventil 34 und das weitere Magnetventil 32 parallel geschaltet.

Das ABS-Drucksteuerventil 38 beeinflusst vom Steuergerät 11 gesteuert den in seinen Eingang eingesteuerten Druck mittels Druckhalten, Drucksenken oder Drucksteigern, um einen aktuellen Bremsschlupf auf einen optimalen Bremsschlupf in bekannter Weise einzuregeln. Hierzu empfängt das Steuergerät 11 Signale von den hier nicht gezeigten Raddrehzahlsensoren. Der den bremsschlupfabhängig gebildeten Bremsdruck aussteuernde Ausgang des ABS-Drucksteuerventils 38 steht schließlich mit dem Bremszylinder 8 in Verbindung.

Gemäß einer weiteren, hier nicht dargestellten Ausführungsform ist keine Fahrdynamikregelung vorgesehen, so dass im Unterschied zu dem in der Figur gezeigten Aufbau kein Magnetventil 18 und kein Wechselventil 20 im Steuerblock 4 vorhanden sind. Dann steht der Kanal 14 des Fußbremsventils 2 direkt mit dem Steuereingang des Relaisventils 24 in Verbindung. Diese Ausführungsform beinhaltet dann lediglich eine ABS-Funktion.

Weiterhin kann auch kein Relaisventil 24 vorgesehen sein, so dass dann entweder der Kanal 14 des Fußbremsventils 2 direkt mit einem Eingang des Wechselventils 28 verbunden ist, das eingangsseitig andererseits vom Ausgang des Druckbegrenzungsventils 26 belastet ist oder, falls eine Fahrdynamikregelung vorgesehen ist, steht dann der ausgangsseitige Druck des weiteren Wechselventils 20 direkt an einem Eingang des Wechselventils 28 an.

Darüber hinaus kann durch eine entsprechende Drucksensorik der Bremsdruck im Bremszylinder 8 als Ist-Bremsdruck gemessen und auf einen Soll-Bremsdruck eingeregelt werden. Eine um eine solche Bremsdruckregelung im Steuergerät 11 erweiterte Bremseinrichtung 1 stellt dann ein elektronisches Bremssystems (EBS) dar.

Nicht zuletzt ist die in der Figur dargestellte Struktur für jeden Kanal 14 oder Bremskreis der Bremseinrichtung 1 vorhanden, welcher dann beispielsweise den Bremsen einer Achse, eines Rades oder zweier diagonal angeordneten Rädern zugeordnet jedoch aus Übersichtlichkeitsgründen nicht dargestellt ist.

Die vorstehend aufgeführten Ausführungsbeispiele können in beliebiger Kombination untereinander kombiniert werden.

Vor diesem Hintergrund ist die Funktionsweise der in der Figur gezeigten Bremseinrichtung 1 wie folgt:
Bei einer Betriebsbremsung mit geringer Bremsanforderung seitens des Fahrers, bei welcher in dem Kanal 14 des Fußbremsmoduls 2 ein Druck von beispielsweise weniger als 2 bar (2˙10⁵ Pa) erzeugt wird, was im folgenden als Niederdruckbereich bezeichnet wird, wird dieser geringe Druck vom Drucksensor 22 gemessen und ein entsprechendes Drucksignal an das Steuergerät 11 gesendet.

Falls kein Eingriff der Fahrdynamikregelung notwendig ist, wird das Magnetventil 18 in Sperrstellung gehalten, so dass vom Wechselventil 20 lediglich der vom Kanal 14 des Fußbremsmoduls 2 erzeugte Druck an den Steuereingang des Relaisventils 24 geschaltet wird, welches daraufhin einen entsprechend modulierten Druck an den Eingang des weiteren Wechselventils 28 aussteuert. Parallel hierzu begrenzt das Druckbegrenzungsventil 26 den vom Druckluftvorrat 10 herangeführten Vorratsdruck auf den vorgegebenen reduzierten Druck von beispielsweise 2 bar (2˙10⁵ Pa). Da dieser reduzierte Druck größer als der vom Relaisventil 24 ausgesteuerte Druck ist, welcher ja kleiner als 2 bar ist (2˙10⁵ Pa), wird von dem weiteren Wechselventil 28 dieser reduzierte Druck von 2 bar (2˙10⁵ Pa)in die zum Ventilblock 6 führende Druckleitung 30 eingespeist. Beim Bremsen im Niederdruckbereich steht folglich dieser vorgegebene reduzierte Druck von beispielsweise von 2 bar (2˙10⁵ Pa) stets in der einzigen vom Steuerblock 4 zum Ventilblock 6 geführten Druckleitung 30 an.

Auf das Drucksignal des Drucksensors 22 hin wird das weitere Magnetventil 32 des Ventilblocks 6 in Durchlassstellung geschaltet, um diesen reduzierten Druck von beispielsweise 2 bar (2˙10⁵ Pa) an den Eingang des weiteren Wechselventils 36 zu schalten. Parallel hierzu steht der reduzierte Druck von 2 bar (2˙10⁵ Pa) am Eingang des Rückhalteventils 34 an, welches jedoch nicht von seiner Sperrstellung als Grundstellung in Durchlassstellung schaltet, weil hierzu ein gegenüber dem reduzierten Druck (2 bar) höherer Schaltdruck notwendig ist. Folglich wird von dem weiteren Wechselventil 36 der vom weiteren Magnetventil 32 weiter geschaltete reduzierte Druck von 2 bar (2˙10⁵ Pa) an den Eingang des ABS-Drucksteuerventils 38 geschaltet, um ihn mittels Druckhalten, Drucksteigern oder Drucksenken bremschlupfabhängig zu regeln.

Bei einer Bremsung mit höherer Bremsanforderung seitens des Fahrers, bei welcher in dem Kanal 14 des Fußbremsmoduls ein Druck von mehr als dem vorgegebenen reduzierten Druck von beispielweise 2 bar (2˙10⁵ Pa) erzeugt wird, was im folgenden als Hochdruckbereich bezeichnet wird, ist der an dem weiteren Wechselventil 28 anstehende Druck des Relaisventils 24 größer als der vom Druckbegrenzungsventil ausgesteuerte reduzierte Druck von 2 bar (2˙10⁵ Pa), so dass dieser höhere Druck in die einzige Druckleitung 30 zwischen dem Steuerblock 4 und dem Ventilblock 6 eingespeist wird.

Weiterhin wird auf die vom Drucksensor 22 gemessene Bremsanforderung hin das weitere Magnetventil 32 des Ventilsblocks 6 von dem Steuergerät 11 in Durchlassstellung geschaltet. Parallel hierzu sorgt der gegenüber dem den Umschaltdruck des Rückhalteventils 34 bildenden reduzierten Druck von beispielsweise von 2 bar (2˙10⁵ Pa) höhere Druck dafür, dass das Rückhalteventil 34 ebenfalls in Durchlassstellung geschaltet wird, so dass an den Eingängen des weiteren Wechselventils 36 jeweils dieser höhere Druck ansteht. Aufgrund geringer Differenzen der Druckwerte wird dann in jedem Fall einer dieser höheren Drücke von mehr als beispielsweise 2 bar (2˙10⁵ Pa) an den Eingang des ABS-Drucksteuerventils 11 geschaltet, so dass sich im Bremszylinder 8 ein Bremsdruck einstellt, welcher um den Betrag des vom Druckbegrenzungsventil 26 erzeugten reduzierten Drucks von beispielsweise 2 bar (2˙10⁵ Pa) vermindert ist.

Falls der elektrische Bremskreis ausfällt und deshalb das weitere Magnetventil 32 des Ventilblocks 6 nicht mehr bestromt werden kann, so bleibt jedoch der Druckpfad längs des Rückhalteventils 34 stets als rein pneumatischer Bremskreis und unterlegte Sicherheitsebene erhalten. Die Trennung des elektrischen Bremskreises vom pneumatischen Bremskreis erfolgt daher nach Mündung der einzigen Druckleitung 30 in den Ventilblock 6, falls man von dem dann ebenfalls funktionsunfähigen Magnetventil 18 im Steuerblock 4 absieht, welches ohne hin nur für fahrerbremswunschunabhängige Funktionen wie die Fahrdynamikregelung dient.

Für den Fall, dass die Bremsanforderung nicht vom Fahrer, sondern vom Fahrdynamikregelsystem erzeugt wird, etwa weil ein instabiler Fahrzustand von entsprechenden Sensoren detektiert wurde, so schaltet das Steuergerät 11 das Magnetventil 18 in Durchlassstellung, um über das Relaisventil 24 den maximal möglichen Bremsdruck (Hochdruckbereich) an den rad- oder achsnah angeordneten Ventilblock 6 auszusteuern.

### Bezugszeichenliste

- 1: Bremseinrichtung
- 2: Fußbremsventil
- 4: Steuerblock
- 6: Ventilblock
- 8: Bremszylinder
- 10: Druckluftvorrat
- 11: Steuergerät
- 12: Druckleitung
- 14: Kanal
- 18: Magnetventil
- 20: Wechselventil
- 22: Drucksensor
- 24: Relaisventil
- 26: Druckbegrenzungsventil
- 28: Wechselventil
- 30: Druckleitung
- 32: Magnetventil
- 34: Rückhalteventil
- 36: Wechselventil
- 38: Drucksteuerventil

## Patentansprüche

1. Druckmittelbetätigte Bremseinrichtung (1) eines Fahrzeugs, beinhaltend:
a) wenigstens einen Druckmittelvorrat (10), welcher wenigstens einen Kanal (14) eines Fußbremsventils (2) eingangseitig mit Druckmittel versorgt,
b) ein Druckbegrenzungsventil (26), welches eingangsseitig mit dem Druckmittelvorrat (10) verbunden ist und welches den in dem Druckmittelvorrat (10) herrschenden Vorratsdruck auf einen vorgegebenen reduzierten Druck begrenzt und an seinen Ausgang steuert,
c) ein erstes Wechselventil (28), welches eingangsseitig einerseits mit dem Ausgang des Druckbegrenzungsventils (26) in Verbindung steht und andererseits von einem Kanal (14) des Fußbremsventils (2) steuerbar ist und welches von den eingangsseitig anstehenden Drücken den größeren Druck ausgangsseitig weiter steuert,
d) wenigstens ein erstes Magnetventil (32) welches abhängig von einer elektrischen Ansteuerung durch ein elektronisches Steuergerät (11) den an dem ersten Wechselventil (28) ausgangsseitig weiter gesteuerten Druck im Rahmen einer Durchlassstellung an ein zweites Wechselventil (36) durchsteuert oder diese Durchsteuerung im Rahmen einer Sperrstellung sperrt,
e) ein Rückhalteventil (34), welches den an dem ersten Wechselventil (28) ausgangsseitig weiter gesteuerten Druck im Rahmen einer Sperrstellung zurückhält, wenn dieser Druck kleiner als der vorgegebene reduzierte Druck ist und welches den an dem ersten Wechselventil (28) ausgangsseitig weiter gesteuerten Druck im Rahmen einer Durchlassstellung an das zweite Wechselventil (36) eingangsseitig durchsteuert, falls dieser Druck größer als der vorgegebene reduzierte Druck ist, wobei das zweite Wechselventil (36) von den eingangsseitig anstehenden Drücken den größeren Druck ausgangsseitig weiter steuert,
f) wenigstens ein mit dem zweiten Wechselventil (36) ausgangsseitig verbundenes ABS-Drucksteuerventil (38), welches abhängig von einem an wenigstens einem gebremsten Rad vorliegenden Bremsschlupf den vom zweiten Wechselventil (36) weiter gesteuerten Druck als Bremsdruck in wenigstens einem Bremszylinder (8) steuert, um den Bremsschlupf auf einen optimalen Bremsschlupf einzuregeln,
g) eine Bremsanforderung repräsentierende Signale erzeugende Mittel (22), wobei
h) das elektronische Steuergerät (11) das erste Magnetventil (32) abhängig von den eine Bremsanforderung repräsentierenden Signalen steuert.

2. Bremseinrichtung nach Anspruch 1, **dadurch gekennzeichnet, dass** das elektronische Steuergerät (11) das ABS-Drucksteuerventil (38) abhängig von den eine Bremsanforderung repräsentierenden Signalen sowie abhängig von auf Raddrehzahlen basierenden Bremsschlupfwerten steuert.

3. Bremseinrichtung nach einem der vorhergehenden Ansprüche, **dadurch gekennzeichnet, dass** die eine Bremsanforderung repräsentierenden Signale fahrerbremswunschabhängige Signale und/oder fahrerbremswunschunabhängige Signale umfassen.

4. Bremseinrichtung nach Anspruch 3, **dadurch gekennzeichnet, dass** fahrerbremswunschabhängige Signale erzeugende Mittel (22) wenigstens einen Drucksensor zur Erzeugung eines vom Druck in dem Kanal (14) des Fußbremsventils (2) abhängigen elektrischen Drucksignals beinhalten.

5. Bremseinrichtung nach Anspruch 3 oder 4, **dadurch gekennzeichnet, dass** fahrerbremswunschunabhängige Signale erzeugende Mittel von einer Fahrdynamikregelung (ESP) und/oder einer Antriebsschlupfregelung (ASR) umfasst sind.

6. Bremseinrichtung nach einem der vorhergehenden Ansprüche, **dadurch gekennzeichnet, dass** ein Relaisventil (24) vorgesehen ist, welches an seinem Steuereingang vom Kanal (14) des Fußbremsventils (2) steuerbar ist, eingangsseitig mit dem Druckmittelvorrat (10) und ausgangsseitig mit einem Eingang des ersten Wechselventils (28) in Verbindung steht.

7. Bremseinrichtung nach Anspruch 6, **dadurch gekennzeichnet, dass** ein drittes Wechselventil (20) vorgesehen ist, welches eingangseitig einerseits mit einem vom Steuergerät (11) elektrisch steuerbaren zweiten Magnetventil (18) und andererseits mit dem Kanal (14) des Fußbremsventils (2) verbunden ist, um von den eingangsseitig anstehenden Drücken den größeren Druck an den Steuereingang des Relaisventils (24) weiter zu steuern, wobei das zweite Magnetventil (18) eingangsseitig mit dem Druckmittelvorrat (10) verbunden ist.

8. Bremseinrichtung nach den Ansprüchen 3 und 7, **dadurch gekennzeichnet, dass** das zweite Magnetventil (18) vom Steuergerät (11) durch fahrerbremswunschunabhängige Signale schaltbar ist.

9. Bremseinrichtung nach einem der vorhergehenden Ansprüche, **dadurch gekennzeichnet, dass** wenigstens das Druckbegrenzungsventil (26) und das erste Wechselventil (28) in einem Steuerblock (4) integriert sind.

10. Bremseinrichtung nach den Ansprüchen 6 bis 9, **dadurch gekennzeichnet, dass** auch das Relaisventil (24), das dritte Wechselventil (20) und das zweite Magnetventil (18) in dem Steuerblock (4) integriert sind.

11. Bremseinrichtung nach einem der vorhergehenden Ansprüche, **dadurch gekennzeichnet, dass** wenigstens das Rückhalteventil (34), das erste Magnetventil (32) und das zweite Wechselventil (36) in einem Ventilblock (6) integriert sind, welcher radnah in Bezug zu dem Rad oder achsmittig an einer Achse der Räder angeordnet ist, dessen oder deren Bremszylinder (8) der Ventilblock (6) mit Bremsdruck versorgt.

12. Bremseinrichtung nach Anspruch 11, **dadurch gekennzeichnet, dass** wenigstens ein ABS-Drucksteuerventil (38) in dem Ventilblock (6) integriert ist.

13. Bremseinrichtung nach den Ansprüchen 9 oder 10 und 11 oder 12, **dadurch gekennzeichnet, dass** der Steuerblock (4) den Ventilblock (6) mittels einer einzigen Druckleitung (30) steuert.

14. Bremseinrichtung nach einem der vorhergehenden Ansprüche, **dadurch gekennzeichnet, dass** das elektronische Steuergerät (11) wenigstens das erste Magnetventil (32) in Durchlassstellung schaltet, falls ein eine Bremsanforderung repräsentierendes Signal vorliegt.
